(19) **Europäisches Patentamt**
**European Patent Office**
**Office européen des brevets**

(11) **EP 1 740 910 B1**

(12) **EUROPÄISCHE PATENTSCHRIFT**

(45) Veröffentlichungstag und Bekanntmachung des Hinweises auf die Patenterteilung:
**07.10.2009 Patentblatt 2009/41**

(21) Anmeldenummer: **05736993.6**

(22) Anmeldetag: **15.04.2005**

(51) Int Cl.:
*G01D 5/36* (2006.01)      *G01D 5/347* (2006.01)

(86) Internationale Anmeldenummer:
**PCT/EP2005/003981**

(87) Internationale Veröffentlichungsnummer:
**WO 2005/106397 (10.11.2005 Gazette 2005/45)**

(54) **DREHSTELLER**

ROTATING ACTUATOR

ACTIONNEUR ROTATIF

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **28.04.2004 DE 102004020827**

(43) Veröffentlichungstag der Anmeldung:
**10.01.2007 Patentblatt 2007/02**

(73) Patentinhaber: **Preh GmbH**
**97616 Bad Neustadt a.d. Saale (DE)**

(72) Erfinder:
• **SCHUBERTH, Stefan**
**97616 Bad Neustadt (DE)**

• **SCHULTHEIS, Thilo**
**97616 Bad Neustadt (DE)**

(74) Vertreter: **Bauer, Wulf et al**
**Bauer Vorberg Kayser**
**Patentanwälte**
**Lindenallee 43**
**50968 Köln (Marienburg) (DE)**

(56) Entgegenhaltungen:
**EP-A- 0 361 867         EP-A- 1 180 665**
**DE-A1- 4 318 386      DE-A1- 19 963 809**
**US-A- 4 654 525         US-A- 5 422 479**
**US-A- 6 043 483         US-B1- 6 563 108**
**US-B1- 6 630 659**

EP 1 740 910 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft einen Drehsteller nach dem Oberbegriff des Patentanspruchs 1.

Ein elektromagnetischer Drehsteller ist aus der DE 695 09 237 T (EP 0 767 966 B1) bekannt. Auch die DE 199 64 133 A1 beschreibt einen Drehsteller bzw. Drehschalter.

Derartige Drehsteller weisen zur Drehwinkelermittlung eine Schlichtplatte und Schleifersystem oder eine magnetische Abtastvorrichtung auf.

Die DE 199 17 164 A1 beschreibt einen derartigen Schalter, insbesondere Drehschalter, der einen Kontaktbrücken-Schleifer besitzt, durch den codierte Kontaktbahnen einer Codier-Kontaktscheibe je Einstellendlage ein spezifisch codiertes elektrisches Signal-Muster generiert.

Neben magneto-resitiven oder induktiven / kapazitiven Bedienelementen sind auch optoelektronische Schalter bekannt.

In der DE 43 36 729 A1 wird ein optischer Schalter, ein Wippschalter, vorgeschlagen, der aus einer Lichtquelle sowie einem photoelektrischen Wandlerelement besteht. Angestrebt wird, dass durch ein einziges Bauteil eine ausreichende Beleuchtung des Betätigungsorgans sowie der Schaltvorgang des optischen Schalters selbst vorgenommen wird. Nachteilig ist der komplexe Aufbau eines solchen Schalters.

Eine vorhandene Lichtquelle / LED, welche zur Ausleuchtung seines Drehknopfes und/oder einer Symbolik einer Blende im Nachtdesign benötigt wird, als Teil eines Encoders zur Ermittlung der Bewegungs- und Richtungsinformation des Drehstellers bzw. Bedienelements zu verwenden, schlägt die unveröffentlichte DE 103 14 315. 7 vor. Vorgesehen ist dabei in einer bevorzugten Ausführung, den durch die Abstrahlcharakteristik der Lichtquelle festgelegten, nicht für die Ausleuchtung verwendbare Strahlenbereich als Sendesignal des Encoders zu verwenden. Dieses Lichtsignal wird in einen Lichtverteiler eingekoppelt und an wenigstens zwei Empfängern weitergegeben, die vorzugsweise in gleicher Ebene wie die Lichtquelle und auf der selben Leiterplatine angebracht sind. An den wenigstens zwei Empfängern wird ein digitales Bitmuster, beispielsweise Gray-Code, erzeugt, welches in einer nachfolgende Elektronik weiterverarbeitet wird.

In einigen Fällen wird der Drehwinkel auch optisch mittels Schablonen in mehreren Ebenen ermittelt.

Ein optischer Encoder mit dreifacher Photodiode wird in der DE 199 63 809 C2 offenbart, wobei insbesondere auf die Auswertung bzw. Signalverarbeitung eingegangen wird. Der optische Encoder umfaßt zur quantitativen Erfassung von linear- oder Drehbewegungen eine Rasteinrichtung enthaltend eine periodische Anordnung lichtdurchlässiger und lichtundurchlässiger Bereiche gleicher Länge.

Hier stellt sich die Erfindung die Aufgabe, einen Drehsteller aufzuzeigen, bei dem die Drehwinkelerfassung absolut und ebenfalls berührungslos erfolgt.

Gelöst wird die Aufgabe durch die Merkmale des Patentanspruchs 1.

Vorteilhafte Ausführungen sind in den Unteransprüchen formuliert.

Der Erfindung liegt die Idee zugrunde, mittels eines Codes an Sensoren, die radial in einer Leiterplattenebene angeordnet sind, die absolute Winkelstellung des Drehstellers zu ermitteln. Der mechanische Aufbau ist dabei gering, da auf einen Lichtleiter und/oder eine Lichtumlenkung verzichtet werden kann. Auch aufwendige Codierscheiben oder Gabellichtschranken können entfallen. Auch eine sonst notwendige, beispielsweise diese zusätzlichen Bauelemente aufnehmende Leiterplatte kann vermieden werden.

Vorzugsweise übernimmt der Körper bzw. ein Teil des Körpers des Drehstellers die Codierung, der dazu entsprechende lichtdurchlässige und lichtundurchlässige Bereiche aufweist. Innerhalb des Drehstellers ist eine Lichtquelle angeordnet, die mit mehreren Sensoren zusammenwirkt. Die Anzahl der lichtdurchlässigen als auch lichtundurchlässigen Bereiche sowie deren Länge etc. ist abhängig von der Anzahl der mit der Lichtquelle zusammenwirkenden Sensoren, wobei auch die Anzahl der einzustellenden Rasten eine Rolle spielt.

Anhand eines Ausführungsbeispiels mit Zeichnung soll die Erfindung näher erläutert werden.

Es zeigt

Fig. 1     eine skizzenhafte Sicht auf einen Drehknopfkörper,

Fig. 2     Darstellung eines Drehstellers nach dem Stand der Technik,

Figur 3     ein Codierschema mittels fünf Sensoren,

Figur 4     ein Codierschema mittels vier Sensoren.

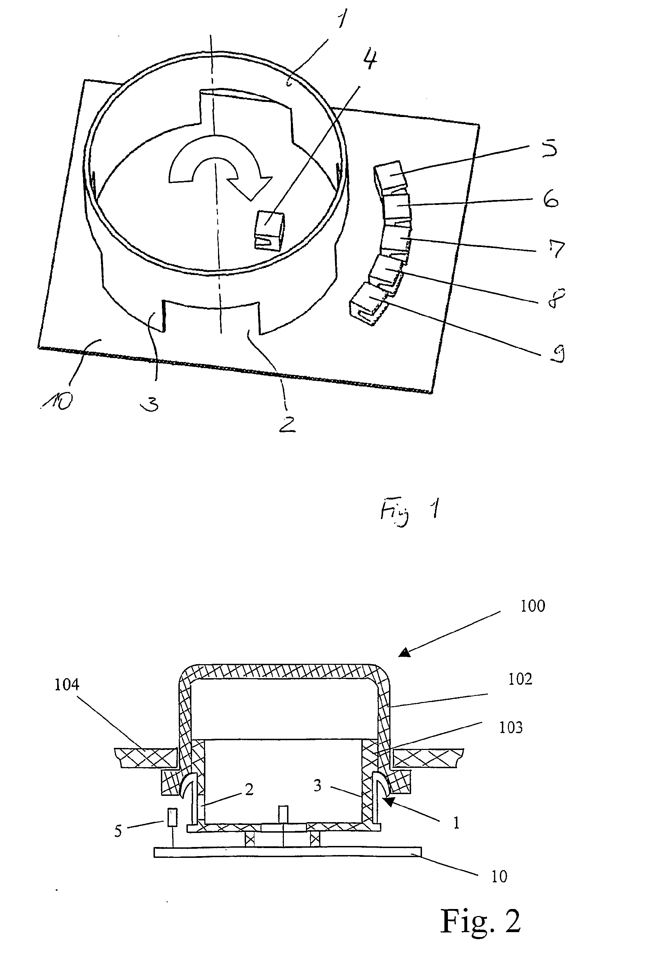

In Fig. 1 ist ein Drehstellerkörper 1 Drehstellers 100 (Fig. 2) skizzenhaft dargestellt. Der Körper 1 weist umfangsseitig lichtdurchlässige Bereiche 2 sowie lichtundurchlässige Bereiche 3 als Codierring auf. Innerhalb des Drehstellerkörpers 1 ist eine Lichtquelle 4, eine Sende-LED, angeordnet, der fünf Sensoren 5 bis 9, Empfänger, gegenüberstehend angebracht sind. Diese Bauelemente sind vorzugsweise auf einer zum Drehsteller zugehörigen Leiterplatte 10 aufgebracht.

In Fig. 2 ist in einer vereinfachten Darstellung der Drehsteller 100 dargestellt, der aus einem hohlen Drehknopf 102 besteht, das mit einem Drehknopfunterteil 103 zusammenwirkt und in einer Blende 104, beispielsweise einer Frontblende eines Kraftfahrzeuges, eingebaut ist. Der Drehstellkörper 1 bzw. Codierring nach Fig. 1 kann hier das Drehknopfunterteil 103 sein.

Die Anzahl der maximal möglichen Rasten n bestimmt sich nach

$$n_{max} = 2^x \, ,$$

wobei x = Anzahl der Sensoren ist.

Der Drehwinkel $\alpha$ ermittelt sich nach

$$\alpha = n \times \varphi,$$

wobei $\varphi$ = der Rastwinkel ist.

Bei einem Drehwinkel gesamt von 360° ergibt sich somit eine Rast nach

$$n_{360°} = 2^x + 1$$

bei 5 Sensoren von 33.

Die Bereiche 2 und 3 sind so konzipiert, dass sich mit dieser Ausführung aus den 33 Rasten der jeweilige Drehwinkel einstellen lassen, wobei die Bereiche 2, 3 nicht gleicher Länge sind.

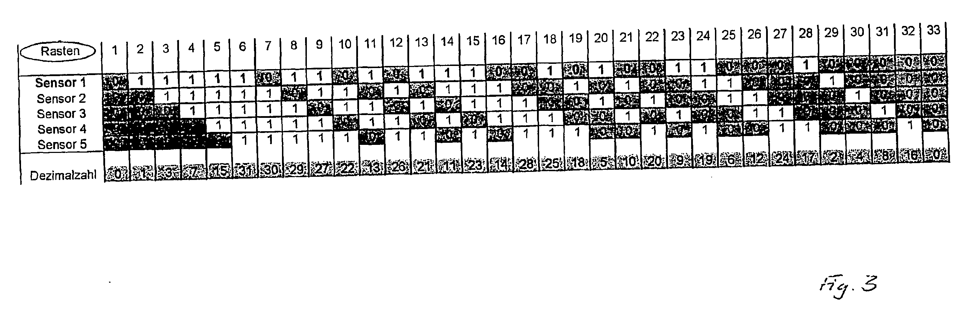

Ein derartiger Aufbau bewirkt, dass die Sensoren 5 bis 9 beim Einstellen der Rasten unterschiedlich von der Sende-LED 4 angesteuert werden. Eine Auswertung, wie die Sensoren 5 bis 9 durch die Lichtquelle 4 angesteuert werden, ist in der Fig. 3 dargestellt. Über eine nicht näher dargestellte Auswerteeinheit werden diese Signale (Dezimalzahlen) dann in herkömmlicher Art und Weise ausgewertet. Die Signale geben somit neben der Information über die eingestellte Rast auch Auskunft über den eingestellten Winkelwert $\alpha$, d.h., den Wert für die absolute Drehwinkelermittlung am Drehsteller.

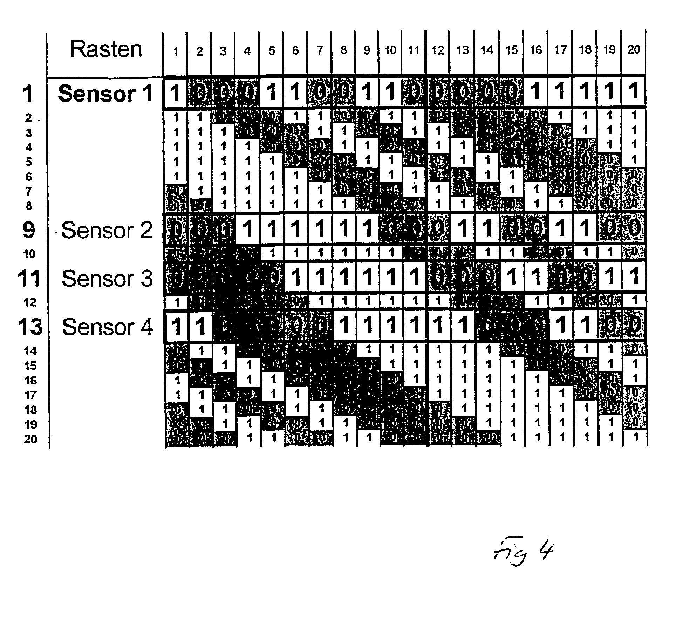

Bei geschickter Anordnung der Sensoren und einem Drehwinkelbereich von kleiner als 360° ist es möglich, einen Gray-Code zu realisieren. Ein Gray-Code zeichnet sich dadurch aus, dass sich von Stellung zu Stellung nur jeweils der Zustand eines Sensors ändert, wie in Fig. 4 dargestellt und als Schiebe-Code bezeichnet werden kann.

## Patentansprüche

1. Drehsteller (100) mit einem optischen Encoder, aufweisend wenigstens eine Sende-LED (4) sowie mehrere Empfangssensoren (5 bis 9), welche radial in einer Leiterplattenebene nebeneinander und auf die entsprechende Sende-LEDs (4) ausgerichtet sind, wobei ein Drehstellkörperteil (1, 103) als Codierring entlang des Umfangs lichtdurchlässige Bereiche (2) und lichtundurchlässige Bereiche (3) aufweist, die beim Verdrehen des Drehstellerkörpertells (1, 103) zwischen Sende-LEDs (4) und Empfangersensoren (5 bis 9) bewegt werden, wodurch bei eingestellten Rasten Signale für eine absolute Drehwinkelermittlung erzeugt werden, wobei die Bereiche (2, 3) nicht gleicher Länge sind, **dadurch gekennzeichnet, dass** die Lange der lichtdurchlässigen Bereiche (2) und der lichtundurchlassigen Bereiche (3) abhängig von der Anzahl (x) der mit der Lichtquelle (4) zusammenwirkenden Sensoren (5, 6, 7, 8, 9) ist, und die Anzahl (x) der Sensoren (5, 8, 7, 8, 9) die Anzahl der maximal möglichen Rasten (n) als Potenz von zwei bestimmt, und sich von Drehstellung zu Drehstellung nur jeweils der Zustand des Sensors ändert, so dass ein Gray-Code realisierbar ist.

## Claims

1. A control dial (100) with an optical encoder, comprising at least one emitter LED (4) as well as several receiver sensors (5 through 9), which are oriented radially side-by-side in a printed circuit board plane and to the corresponding emitter LEDs (4), a body part (1, 103) of said control dial as the coding ring comprising over its circumference translucent regions (2) and opaque regions (3) that are moved between emitter LEDs (4) and receiver sensors (5 through 9) upon rotation of the body part (1, 103) of said control dial, so that signals for absolute determination of the angle of rotation are generated when the detents are set, said regions (2, 3) not having the same length, **characterized in that** the length of the translucent regions (2) and of the opaque regions (3) depends on the number (x) of the sensors (5, 6, 7, 8, 9) cooperating with the light source (4) and the number (x) of said sensors (5, 6, 7, 8, 9) determining the number of the highest possible number of detents (n) as a power of two, and only the condition of the sensor changing from one position of rotation to the other position of rotation so that a gray code may be realized.

## Revendications

1. Actuateur rotatif (100) avec un encodeur optique, comprenant au moins une DEL émettrice (4) ainsi que plusieurs capteurs récepteurs (5 à 9) qui sont disposés radialement les uns à côté des autres dans un plan d'une carte de circuits imprimés et qui sont orientés vers la DEL émettrice correspondante (4), une partie (1, 103) du corps dudit actuateur rotatif présentant, le long de la circonférence, des zones translucides (2) et des zones opaques (3) en tant qu'anneau codeur qui, lors de la rotation de ladite partie (1, 103) du corps de l'actuateur rotatif, sont déplacées entre la diode électroluminescente émettrice (4) et lesdits capteurs récepteurs (5 à 9) conduisant ainsi, à crans d'arrêt réglés, à la génération de signaux pour une détermination absolue de l'angle de rotation, lesdites zones (2, 3) ne sont pas de longueur identique, **caractérisé par le fait que** la longueur des zones translucides (2) et des zones opaques (3) est fonction du nombre (x) des capteurs (5, 6, 7, 8, 9) agissant de concert avec la source de lumière (4), et que le nombre (x) des capteurs (5, 6, 7, 8, 9) détermine le nombre des crans d'arrêt (n) possibles au maximum en tant que puissance de deux, et que, d'une position de rotation à l'autre, ce n'est respectivement que l'état du capteur qui change de sorte que l'on peut réaliser un code Gray.

Fig 1

Fig. 2

EP 1 740 910 B1

| Rasten | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | 32 | 33 |
|---|---|---|---|---|---|---|---|---|---|---|---|---|---|---|---|---|---|---|---|---|---|---|---|---|---|---|---|---|---|---|---|---|---|
| **Sensor 1** | 0 | 1 | 1 | 1 | 1 | 1 | 0 | 1 | 1 | 0 | 1 | 0 | 1 | 1 | 1 | 0 | 0 | 1 | 0 | 1 | 0 | 0 | 1 | 1 | 0 | 0 | 0 | 1 | 0 | 0 | 0 | 0 | 0 |
| Sensor 2 | 0 | 0 | 1 | 1 | 1 | 1 | 1 | 0 | 1 | 1 | 0 | 1 | 0 | 1 | 1 | 1 | 0 | 0 | 1 | 0 | 1 | 0 | 0 | 1 | 1 | 0 | 0 | 0 | 1 | 0 | 0 | 0 | 0 |
| Sensor 3 | 0 | 0 | 0 | 1 | 1 | 1 | 1 | 1 | 0 | 1 | 1 | 0 | 1 | 0 | 1 | 1 | 1 | 0 | 0 | 1 | 0 | 1 | 0 | 0 | 1 | 1 | 0 | 0 | 0 | 1 | 0 | 0 | 0 |
| Sensor 4 | 0 | 0 | 0 | 0 | 1 | 1 | 1 | 1 | 1 | 0 | 1 | 1 | 0 | 1 | 0 | 1 | 1 | 1 | 0 | 0 | 1 | 0 | 1 | 0 | 0 | 1 | 1 | 0 | 0 | 0 | 1 | 0 | 0 |
| Sensor 5 | 0 | 0 | 0 | 0 | 0 | 1 | 1 | 1 | 1 | 1 | 0 | 1 | 1 | 0 | 1 | 0 | 1 | 1 | 1 | 0 | 0 | 1 | 0 | 1 | 0 | 0 | 1 | 1 | 0 | 0 | 0 | 1 | 0 |
| Dezimalzahl | 0 | 1 | 3 | 7 | 15 | 31 | 30 | 29 | 27 | 22 | 13 | 26 | 21 | 11 | 23 | 14 | 28 | 25 | 18 | 5 | 10 | 20 | 9 | 19 | 6 | 12 | 24 | 17 | 2 | 4 | 8 | 16 | 0 |

Fig. 3

| Rasten | 1 | 2 | 3 | 4 | 5 | 6 | 7 | 8 | 9 | 10 | 11 | 12 | 13 | 14 | 15 | 16 | 17 | 18 | 19 | 20 |
|---|---|---|---|---|---|---|---|---|---|---|---|---|---|---|---|---|---|---|---|---|
| **Sensor 1** | 1 | 0 | 0 | 0 | 1 | 1 | 0 | 0 | 1 | 1 | 0 | 0 | 0 | 0 | 0 | 1 | 1 | 1 | 1 | 1 |
| | 1 | 1 | | | | 1 | 1 | | 1 | | 1 | | | | | | 1 | 1 | 1 | 1 |
| | 1 | 1 | 1 | | | | 1 | | | | 1 | 1 | 1 | | | | | 1 | 1 | 1 |
| | 1 | 1 | | 1 | | | 1 | 1 | | | | 1 | 1 | | | | | | 1 | 1 |
| | 1 | 1 | | 1 | 1 | | | 1 | | | 1 | | 1 | 1 | | | | | | 1 |
| | | 1 | 1 | 1 | 1 | 1 | | 1 | | | 1 | | | 1 | 1 | | | | | |
| | 1 | 1 | 1 | 1 | 1 | 1 | 1 | | | | 1 | 1 | | | | 1 | | | | |
| | | 1 | 1 | 1 | 1 | 1 | 1 | 1 | | | | 1 | 1 | | | | 1 | | | |
| **Sensor 2** | 0 | 0 | 0 | 1 | 1 | 1 | 1 | 1 | 1 | 0 | 0 | 0 | 1 | 1 | 0 | 0 | 1 | 1 | 0 | 0 |
| | | | | | | | 1 | | | | | | | 1 | | | 1 | 1 | 1 | |
| **Sensor 3** | 0 | 0 | 0 | 0 | 1 | 1 | 1 | 1 | 1 | 1 | 0 | 0 | 0 | 1 | 1 | 0 | 0 | 1 | 1 | 1 |
| | 1 | | | | | | 1 | 1 | 1 | 1 | 1 | | | | | | 1 | 1 | | 1 |
| **Sensor 4** | 1 | 1 | | | 0 | 0 | 1 | 1 | 1 | 1 | 1 | | | 0 | | | 1 | 1 | 0 | 0 |
| | | 1 | 1 | | | | | 1 | 1 | 1 | 1 | 1 | 1 | | | | 1 | 1 | |
| | | 1 | 1 | 1 | | | | | 1 | 1 | 1 | 1 | 1 | 1 | | | 1 | 1 | |
| | 1 | | | 1 | 1 | | | | 1 | | 1 | 1 | 1 | | 1 | | 1 | | |
| | 1 | 1 | | | 1 | 1 | | | | 1 | 1 | 1 | 1 | | 1 | 1 | | |
| | | 1 | 1 | | 1 | 1 | | | | 1 | 1 | 1 | 1 | | 1 | 1 | 1 | |
| | | | 1 | 1 | | | | | | | | 1 | 1 | | 1 | 1 | 1 | 1 |
| | | | 1 | 1 | | | 1 | | 1 | | | | | | 1 | 1 | 1 | 1 | 1 |

*Fig 4*

7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 69509237 T
- EP 0767966 B1
- DE 19964133 A1
- DE 19917164 A1
- DE 4336729 A1
- DE 10314315
- DE 19963809 C2